Europäisches Patentamt

European Patent Office

Office européen des brevets

(19)

(11) **EP 1 288 172 B1**

(12) **EUROPEAN PATENT SPECIFICATION**

(45) Date of publication and mention
of the grant of the patent:
**27.04.2005 Bulletin 2005/17**

(51) Int Cl.⁷: **C03C 13/00**

(21) Application number: **02019128.4**

(22) Date of filing: **29.08.2002**

(54) **Inorganic fiber and process of producing the same**

Anorganische Faser und Verfahren zu dessen Herstellung

Fibre inorganique et méthode de sa production

(84) Designated Contracting States:
**DE FR GB**

(30) Priority: **30.08.2001 JP 2001261306**

(43) Date of publication of application:
**05.03.2003 Bulletin 2003/10**

(73) Proprietor: **NICHIAS CORPORATION**
**Tokyo (JP)**

(72) Inventors:
• **Kusuno, Katsuya**
  **Hamamatsu-shi, Shizuoka (JP)**
• **Dohi, Satoshi**
  **Hamamatsu-shi, Shizuoka (JP)**
• **Kitahara, Hideki**
  **Hamamatsu-shi, Shizuoka (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 1 184 348          WO-A-95/32925**
**DE-U- 29 709 025          US-A- 5 968 648**

## EP 1 288 172 B1

**Description**

FIELD OF THE INVENTION

This invention relates to an inorganic fiber and a process of producing the same. It particularly relates to an inorganic fiber which is highly heat resistant and biosoluble in the body and dischargeable from the body. The invention also relates to a process of producing the inorganic fiber.

BACKGROUND OF THE INVENTION

Inorganic fibers such as heat resistant glass fibers and ceramic fibers are widely used in heat insulation parts of various structures, such as buildings, because of their excellent heat resistance.

On the other hand, inorganic fibers are liable to be suspended in the air during manufacture, storage, transportation or working and can enter human bodies through inhalation. Of the inorganic fibers entering the body those with relatively large sizes are caught in the nasal cavity or the oral cavity and discharged out of the body together with snivel or saliva or swallowed into the digestive organs such as the stomach. Fine fibers, however, can pass through the nose or the mouth and reach the lungs and adhere to the alveoli (balloon-like gas exchanging structures).

In general, if foreign matter enters an alveolus of the lungs, alveolar macrophages surround the foreign matter and carry it to the places with cilia, i.e., the trachea and the bronchi so that it may be driven out with phlegm or make the foreign matter be discharged through lymph and lymphatic vessels. However, the macrophages can be irritated or damaged while surrounding foreign matter, resulting in release of proteolytic or collagenolytic enzymes therefrom. In the presence of excessive proteolytic or collagenolytic enzymes, the alveolar cells come to be inflamed or collagenated. Inflamed cells has reduced resistance, and DNA in the cellular nucleus becomes susceptible to damage. Besides, cell destruction and cell regeneration alternate frequently, giving increased opportunities to abnormal cells to emerge, which can induce denaturation of DNA cells or cancer development.

Hence inorganic fibers for the above-described applications have recently come to be required to have solubility in physiological liquids such as pulmonary liquid, i.e., biodegradability, as well as heat resistance. Various inorganic fibers have been proposed for meeting the requirement.

For example, JP-W-10-512232 (WO97/16386) discloses a glass fiber which comprises silica ($SiO_2$) and magnesia (MgO) as essential components and zirconia ($ZrO_2$) as an optional component and exhibits heat resistance at 1260°C or higher and non-resistance to physiological liquids. Of these components, magnesium is the most capable of dissolving in a living body, and silicon and zirconium follow in this order. Zirconium little dissolves.

In order to ensure safety of inorganic fibers in case of inhalation, it is needless to say that fibers of higher solubility in the body are more desirable. Although the addition of an alkali metal oxide, e.g., $Na_2O$ or $K_2O$, or an alkaline earth metal oxide, e.g., CaO, brings about an increased solubility of the fibers, an alkali content markedly reduces the heat resistance of the fiber due to the formation of low-melting compounds by the alkali.

WO-A-95/32925 discloses a biologically degradable mineral fiber containing 50 to 60% by weight silicon oxide, 10 to 16% by weight calcium oxide and magnesium oxide, and up to 4% by weight manganese oxide. The fibers disclosed in Table I contain up to 55.5% by weight silicon oxide, up to 3.6% by weight magnesium oxide, and 2% by weight manganese oxide.

DE-U-29709025 discloses a biologically degradable fiber comprising 30 to less than 51% by weight silicon oxide, up to 15% by weight magnesium oxide, and up to 8% by weight manganese oxide. The fiber of Example 2 contains 38.3% by weight silicon oxide, 9.8% by weight magnesium oxide and 1.0% by weight manganese oxide.

US-A-5968648 discloses a mineral fiber having biosolubility, said fiber containing silicon oxide, calcium oxide and magnesium oxide as main components. Some fibers disclosed in this publication contain manganese oxide.

EP-A-1184348 (relevant with respect to Article 54(3) EPC) discloses a mineral fiber comprising 60 to 80% by weight silicon oxide, 15 to 30% by weight magnesium oxide, and 0.5 to 20% by weight titanium oxide. The fiber may contain up to 10% by weight manganese oxide. The fibers of Examples 13 and 14 and the fiber of Comparative Example 9 contain silicon oxide and magnesium oxide as main components and further a substantial amount of manganese oxide. This publication further discloses a process for producing an inorganic fiber comprising heating the raw material mixture at 1700 to 2000°C to obtain a melt, and fiberizing the melt by quenching.

SUMMARY OF THE INVENTION

An object of the present invention is to provide an inorganic fiber having high heat resistance so as not to melt even at 1400°C and excellent biosolubility as compared with conventional ones.

Another object of the present invention is to provide a process for producing such an inorganic fiber.

Other objects and effects of the invention will become apparent from the following description.

The above-described objects have been achieved by providing:

An inorganic fiber comprising, as essential components, $SiO_2$ in an amount of from 60 to 80% by weight, MgO in an amount of from 15 to 30% by weight, and a manganese oxide in an amount of from 0.5 to 20% by weight, said inorganic fiber having an amorphous portion comprising these essential components in its structure, said inorganic fiber further comprising $Al_2O_3$ in an amount of 2% by weight or less, CaO in an amount of 3% by weight or less, and each of $Na_2O$, $K_2O$ and BaO in an amount of 0.5% by weight or less, said fiber being free of titanium dioxide and zirconium oxide; and

A process of producing an inorganic fiber comprising: heating a raw material mixture at 1700 to 2000°C to obtain a melt, said raw material mixture comprising $SiO_2$ in an amount of from 60 to 80% by weight, MgO in an amount of from 15 to 30% by weight, a manganese oxide in an amount of from 0.5 to 20% by weight, $Al_2O_3$ in an amount of 2% by weight or less, CaO in an amount of 3% by weight or less, and each of $Na_2O$, $K_2O$ and BaO in an amount of 0.5% by weight or less, said raw material mixture being free of titanium dioxide and zirconium oxide, and

fiberising the melt by quenching.

According to a preferred embodiment of the present invention the inorganic fiber contains $SiO_2$ in an amount of from 65 to 80% by weight, MgO in an amount of from 15 to 28% by weight, and said manganese oxide in an amount of from 4 to 20% by weight.

BRIEF DESCRIPTION OF THE DRWAINGS

Fig. 1 graphically shows the relationship between the severance of the fiber network structure and the dissolution rate constant of the inorganic fibers prepared in the Examples and Comparative Examples.

Fig. 2 graphically shows the influence of the MnO content on the dissolution rate constant exclusive of the influence of the fiber network severance, as observed in the Examples and Comparative Examples.

DETAILED DESCRIPTION OF THE INVENTION

The present invention will be described with reference to the accompanying drawings.

The basic composition of the inorganic fiber according to the invention essentially comprises $SiO_2$, MgO, and a manganese oxide. The term "manganese oxide" as used herein denotes MnO, $MnO_2$ or both.

It has been said that the solubility of an inorganic fiber relies on the alkali metal oxide or alkaline earth metal oxide content in the fiber. This is attributed to the process of producing the inorganic fiber. That is, an inorganic fiber is manufactured by melting raw materials and cooling the melt by an appropriate means into a fibrous amorphous structure. In the melt an aggregate of components forming nuclei of fibers, such as $SiO_2$ and $Al_2O_3$, forms a firm network structure, which is maintained in the fibers obtained by cooling the melt. Where an alkali metal oxide, e.g., $Na_2O$ or $K_2O$, or an alkaline earth metal oxide, e.g., CaO, is present in the melt, the network structure is to be severed into small aggregates. In case such an inorganic fiber enters the body and receives attack of $H^+$ or $OH^-$ in a biological liquid, the network structure is cut, and the force of restraining fiber-forming components in the fiber structure is thus weakened to permit the components to dissolve out.

Taking advantage of the above-mentioned mechanism, it has been a practice mainly followed to add an alkali metal oxide or an alkaline earth metal oxide as a component for increasing biosolubility. In some cases $P_2O_5$ or $Fe_2O_3$ has been added for the same purpose. A manganese oxide, an essential component in the present invention, has hitherto been regarded as an unavoidable impurity. The present inventors have found that the incorporation of a prescribed amount of a manganese oxide brings about a great improvement on biosolubility of an inorganic fiber.

Of alkali metal oxides and alkaline earth metal oxides effective to increase the biosolubility of inorganic fibers, beryllium oxide (BeO) is the most effective on heat resistance as evaluated in terms of the eutectic temperature of a system combined with $SiO_2$. Nevertheless a beryllium compound is unsuitable as a material of biosoluble fibers on account of its high toxicity. The second best (having the second highest eutectic temperature) is MgO, whose eutectic temperature with $SiO_2$ is 1543°C, which is higher than that of an $SiO_2$-CaO system by 100°C or more. Accordingly, it is essential to combine $SiO_2$ and MgO in order to enhance the heat resistance of an inorganic fiber as well as the biodegradability. However, if the $SiO_2$-MgO system contains any one of $Na_2O$, $K_2O$, CaO, SrO, $P_2O_5$, and $Fe_2O_3$, the heat resistance is impaired, and the resulting system melts below 1400°C. This is because these components form low-melting compounds whose melting point is below 1400°C with $SiO_2$, MgO or both.

To the contrary, the incorporation of a manganese oxide improves the biosolubility without impairing the high heat resistance of the $SiO_2$-MgO system. This is because a manganese oxide does not form low-melting compounds with $SiO_2$ and/or MgO unlike $Na_2O$, $K_2O$, CaO, SrO, $P_2O_5$, or $Fe_2O_3$.

In order to obtain an inorganic fiber which mainly comprises $SiO_2$ and MgO and exhibits not only such a heat resistance not to melt at 1400°C but a higher biosolubility than other inorganic fibers mainly comprising $SiO_2$ and MgO, the inorganic fiber comprises 60 to 80% by weight of $SiO_2$, and 15 to 30% by weight of MgO. The inorganic fiber further comprises 0.5 to 20% by weight, in terms of MnO, of a manganese oxide. A preferred composition comprises 65 to 80% by weight of $SiO_2$, 15 to 28% by weight of MgO, and 2 to 20% by weight, in terms of MnO, of a manganese oxide. A particularly preferred composition comprises 65 to 80% by weight of $SiO_2$, 15 to 28% by weight of MgO, and 4 to 20% by weight, in terms of MnO, of a manganese oxide. An especially preferred composition comprises 70 to 80% by weight of $SiO_2$, 15 to 28% by weight of MgO, and 4 to 20% by weight, in terms of MnO, of a manganese oxide.

$SiO_2$ is a component forming the basic network structure of the inorganic fiber and making a great contribution to the heat resistance. An $SiO_2$ content less than 60 wt% results in a poor heat resistance. An $SiO_2$ content more than 80 wt% may result in too high a melt viscosity, which can interfere with fiberising.

MgO is not only essential for executing the process of quenching the melt into amorphous fibers similarly to $SiO_2$ but contributory to the biosolubility of the inorganic fiber because it has a higher biosolubility than $SiO_2$. An MgO content lower than 15 wt% makes fiberising difficult. Where the MgO content exceeds 30 wt%, the amounts of the other components tend to be insufficient for manifesting their full effects.

The manganese oxide is more effective in improving the biosolubility than MgO and becomes more effective in proportion to its content as will be demonstrated in the Examples described later. The manganese oxide is also effective to lower the viscosity of the melt and is preferred for smoothly carrying out fiberising. To have these effects revealed, the manganese oxide is used in an amount of at least 0.5% by weight in terms of MnO. An MnO content more than 20% by weight results in an unfavorable viscosity of the melt for fiberising.

Besides being biosoluble as described above, the inorganic fiber of the present invention is equal or superior in heat resistance to inorganic fibers of related art. The inorganic fiber in the above-described range of composition has as low a percent shrinkage as 5% or less when heated at 1200°C for 8 hours, which is sufficient for practical use. The inorganic fiber in the above-described range of composition retains its fibrous shape even when heated at 1400°C for 8 hours as demonstrated in the Examples given hereunder. Seeing that the heat resistance owes basically to $SiO_2$, the $SiO_2$ content can be increased within the above-recited range where the heat resistance is of particular interest.

If desired, the inorganic fiber of the invention may contain other components in addition to $SiO_2$, MgO, and the manganese oxide.

Raw materials which are used in the present invention have an $Al_2O_3$ content of 2% by weight or less and a CaO content of 3% by weight or less. $Al_2O_3$ reacts with $SiO_2$ to form aluminosilicates, which cause the resulting inorganic fiber to have a reduced biosolubility. CaO reacts with $SiO_2$ to form low-melting compounds, which cause the resulting fiber to have a reduced heat resistance. Further, the presence of too much alkali metal or alkaline earth metal oxides, such as $Na_2O$, $K_2O$, and BaO, reduces the heat resistance of the fiber. Accordingly, these oxides are present in an amount not more than 0.5% by weight each.

The inorganic fiber of the present invention is obtained by heating a raw material mixture to a high temperature between 1700° and 2000°C and fiberising the melt by quenching. Fiberising by quenching is effected by, for example, blowing or spinning. The raw materials which can be used in the invention include not only pure materials but silica sand as an $SiO_2$ source; magnesite, magnesia clinker, olivine, and olivine sand as an MgO source; and manganese dioxide, soil manganese, manganese ore, rhodonite, and tephroite as an MnO source.

The present invention will now be illustrated in greater detail with reference to the following Examples and Comparative Examples.

EXAMPLES 1 TO 11 AND COMPARATIVE EXAMPLES 1 TO 11

Silica sand, magnesium oxide, and manganese dioxide were compounded at a predetermined ratio, and the mixture was melted in an electric oven at 1700 to 2000°C. The melt was fiberised by blowing. The compositions of the resulting inorganic fibers are shown in Tables 1 and 2 below. In the tables "Others" means impurities originated in the raw materials, including alkali metals, alkaline earth metals except Ca and Mg, and iron oxides. Comparative Example 10 is a highly heat-resistant ceramic fiber commonly used in the art. Comparative Example 11 is a fiber classified as "category 0 (no carcinogenicity)" according to the European classification of biosolubility.

TABLE 1

| Chemical Composition (wt%) | | | | | | |
|---|---|---|---|---|---|---|
| Example No. | $SiO_2$ | MgO | MnO | $Al_2O_3$ | CaO | Others |
| 1 | 73.9 | 20.8 | 4.5 | 0.6 | 0.2 | 0.1 |
| 2 | 72.5 | 24.5 | 1.7 | 0.9 | 0.2 | 0.1 |
| 3 | 72.2 | 22.9 | 3.5 | 1.1 | 0.2 | 0.1 |
| 4 | 77.8 | 16.7 | 4.0 | 1.1 | 0.2 | 0.2 |
| 5 | 65.4 | 25.1 | 8.6 | 0.5 | 0.2 | 0.3 |
| 6 | 70.4 | 21.0 | 7.7 | 0.4 | 0.2 | 0.2 |
| 7 | 69.5 | 19.2 | 10.6 | 0.5 | 0.2 | 0.1 |
| 8 | 69.1 | 15.8 | 14.3 | 0.4 | 0.2 | 0.1 |
| 9 | 60.5 | 19.2 | 18.7 | 0.9 | 0.2 | 0.4 |
| 10 | 74.3 | 23.2 | 0.5 | 1.1 | 0.3 | 0.5 |
| 11 | 64.2 | 28.2 | 6.2 | 0.9 | 0.2 | 0.3 |

TABLE 2

| Chemical Composition (wt%) | | | | | | |
|---|---|---|---|---|---|---|
| Compara. Example No. | $SiO_2$ | MgO | MnO | $Al_2O_3$ | CaO | Others |
| 1 | 56.3 | 19.6 | 22.6 | 1.1 | 0.2 | 0.2 |
| 2 | 59.2 | 24.3 | 15.3 | 0.9 | 0.2 | 0.1 |
| 3 | 77.0 | 14.8 | 6.8 | 1.0 | 0.2 | 0.2 |
| 4 | 81.2 | 15.6 | 2.0 | 0.9 | 0.2 | 0.1 |
| 5 | 78.1 | 20.8 | 0.1 | 0.7 | 0.2 | 0.0 |
| 6 | 68.7 | 29.7 | 0.1 | 0.8 | 0.2 | 0.5 |
| 7 | 66.9 | 32.2 | 0.0 | 0.6 | 0.2 | 0.1 |
| 8 | 74.1 | 25.0 | 0.1 | 0.6 | 0.2 | 0.0 |
| 9 | 78.0 | 19.9 | 0.0 | 0.1 | 0.2 | 0.8 |
| 10 | 51.5 | 0.0 | 0.0 | 48.2 | 0.0 | 0.3 |
| 11 | 77.7 | 18.9 | 0.0 | 2.2 | 0.3 | 0.9 |

Solubility test:

Each of the inorganic fibers shown in Tables 1 and 2 was filtered through a 325 mesh sieve to remove particulate matter (commonly referred to as "shot"). An aliquot precisely weighing 0.1 g was put on a filter paper laid on the mouth of a reservoir. Physiological saline having the formulation shown below was dropped thereon by use of a micropump at a rate of 0.3 ml/mn. While the physiological saline passed through the fiber on the filter paper, the fiber components were eluted out. The physiological saline was kept at 37°C (the temperature of biological liquids). The eluate in the reservoir was taken out after 96 hours and analyzed with an ICP-AES apparatus to determine the amount of the solute (fiber components), from which the solubility of the fiber was calculated. Because a difference in fiber surface area due to a difference in fiber diameter is reflected on the thus obtained solubility, the fiber diameter was separately measured to obtain the surface area, for which the solubility was corrected to obtain a solubility per unit time per unit surface area (ng/cm$^2$·hr; hereinafter referred to as a dissolution rate constant).

| Formulation of physiological saline: | |
|---|---|
| Water | 1 liter |
| Sodium chloride | 6.780 g |
| Ammonium chloride | 0.535 g |
| Sodium hydrogencarbonate | 0.268 g |
| Sodium dihydrogencitrate | 0.166 g |
| Sodium citrate dihydrate | 0.059 g |
| Glycine | 0.450 g |
| Calcium chloride | 0.022 g |
| Sulfuric acid | 0.049 g |
| pH = 7.4 | |

Heat resistance test:

Each of the inorganic fibers shown in Tables 1 and 2 was thoroughly disentangled. After particulate matter "shot" was removed, about 10 g of the fiber was put in a crucible without being pressed. The crucible was placed in an electric oven. The oven temperature was raised up to 1400°C at a rate of 200°C/hr, at which the crucible was maintained for 8 hours. After cooling, the crucible was taken out of the oven, and the contents were evaluated with the naked eye and by the feel. The heat resistance was rated in terms of shape retention on an A-to-D scale as follows.

A     The fiber shape is retained. The fiber shows flexibility.
B     The fiber shape is retained. The fiber shows poor flexibility.
C     The fiber shape is retained, but the fiber is ready to collapse on being pressed strongly.
D     The fiber is in a completely molten state.

The test results obtained are shown in Table 3. Of the inorganic fibers those having an MnO content exceeding 10 wt% (Examples 7 to 9 and Comparative Example 2) were slightly inferior to those with an MnO content of 10 wt% or smaller in ease of fiberising but capable of providing fibers that were not inferior by controlling the electricity quantity of the electric oven. The composition of Comparative Example 1, which had an MnO content exceeding 20 wt%, had so low a viscosity that fiberising was difficult. As shown in Table 3, fibers containing a manganese oxide have a higher dissolution rate constant in physiological saline. Since the biosolubility largely depends on the degree of severance of the fiber network structure as stated previously, the degree of severance of the network structure was standardized. That is, assuming that the components constituting the network are Si ($SiO_2$) and Al ($Al_2O_3$) and that the components severing the network are Mg (MgO), Ca (CaO), and Mn (MnO), the ratio of these components defined by the following equation is taken as a network severance index, simply "severance index". From the concept of network severance, Si, Al, Mg, Ca, and Mn are represented in molar quantity.

$$\text{Severance index} = (Mg+Ca+Mn \ (mol\%))/(Si+Al(mol\%))$$

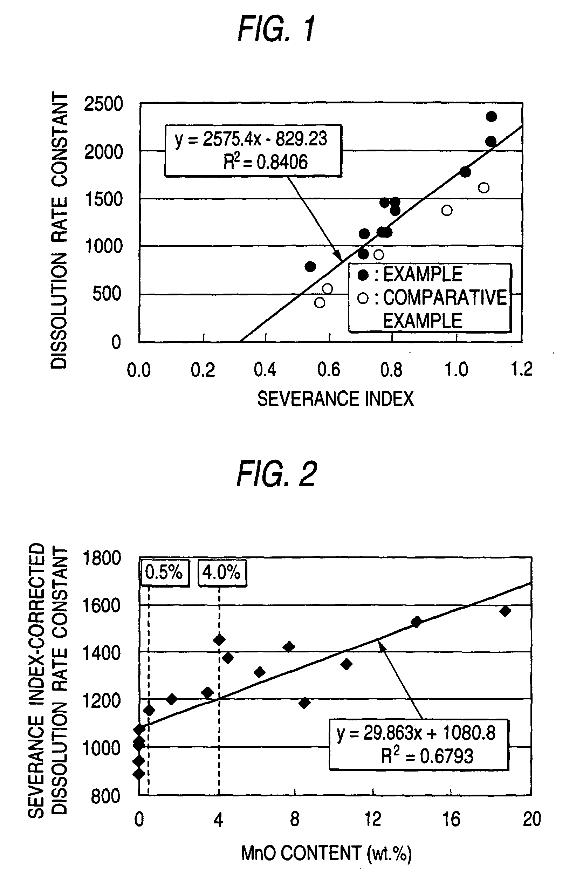

The severance index of the inorganic fibers of Examples 1 to 11 and Comparative Examples 5 to 9, which had been produced with ease and did not melt at 1400°C, were obtained. The severance index and the dissolution rate constant of these inorganic fibers are shown in Table 4, and their relationship is shown in Fig. 1. As shown in Fig. 1, while the dissolution rate constant is largely influenced by the severance index, there are observed sufficiently significant differences of the dissolution rate constant between the inorganic fibers of the Examples which contained manganese oxide and the comparative ones containing no or little manganese oxide. Hence, the influence of the severance index on the dissolution rate constant was excluded from the results as follows. The slope of the straight line depicted in Fig. 1, 2575.4, was taken as the degree of the influence by severance index. This value was used to calculate the dissolution rate constant at a severance index of 0.8 (hereinafter referred to as a severance index-corrected dissolution rate constant) according to the equation:

Severance index-corrected dissolution rate constant

= each dissolution rate constant - 2575.4 x (each

severance index - 0.8)

Analysis on the relationship between the severance index-corrected dissolution rate constant and the MnO content reveals the effects of the manganese oxide on the dissolution rate constant. Table 5 shows the MnO contents and the severance index-corrected dissolution rate constants, and Fig. 2 represents the relationship between them. Fig. 2 indicates the influence of manganese oxide on the severance index-corrected dissolution rate constant. Even as low an MnO content as 0.5% is effective, and the presence of 4% or more of MnO produces a markedly increased effect. This seems to be because Mn is more effective than Mg in severing the inorganic fiber network structure and the presence of 4% or more of MnO ensures the severing effect. The inorganic fibers of the Examples are much superior in these parameters to the commonly used ceramic fiber of Comparative Example 10 and are superior even to the inorganic fiber of Comparative Example 11 which is classified as "category 0 (no carcinogenicity)".

TABLE 3

|  | Dissolution Rate Constant (ng/cm$^2$·hr) | Heat Resistance | Fiberising |
|---|---|---|---|
| Example 1 | 1136 | A | possible |
| Example 2 | 1150 | A | possible |
| Example 3 | 1139 | A | possible |
| Example 4 | 790 | A | possible |
| Example 5 | 1755 | B | possible |
| Example 6 | 1438 | A | possible |
| Example 7 | 1370 | B | possible |
| Example 8 | 1459 | B | possible |
| Example 9 | 2339 | C | possible |
| Example 10 | 917 | A | possible |
| Example 11 | 2080 | C | possible |
| Compara. Example 1 | - | D | difficult |
| Compara. Example 2 | - | D | possible |
| Compara. Example 3 | - | A | difficult |
| Compara. Example 4 | - | A | difficult |
| Compara. Example 5 | 554 | A | possible |
| Compara. Example 6 | 1369 | B | possible |
| Compara. Example 7 | 1600 | B | possible |
| Compara. Example 8 | 914 | A | possible |
| Compara. Example 9 | 414 | A | possible |
| Compara. Example 10 | 8 | A | commercial article |
| Compara. Example 11 | 339 | A | commercial article |

TABLE 4

|  | Severance Index | Dissolution Rate Constant (ng/cm$^2$·hr) |
|---|---|---|
| Example 1 | 0.708 | 1136 |
| Example 2 | 0.783 | 1150 |

TABLE 4   (continued)

|  | Severance Index | Dissolution Rate Constant (ng/cm$^2$·hr) |
|---|---|---|
| Example 3 | 0.766 | 1139 |
| Example 4 | 0.543 | 790 |
| Example 5 | 1.023 | 1755 |
| Example 6 | 0.808 | 1438 |
| Example 7 | 0.811 | 1370 |
| Example 8 | 0.776 | 1459 |
| Example 9 | 1.099 | 2339 |
| Example 10 | 0.706 | 917 |
| Example 11 | 1.099 | 2080 |
| Compara. Example 5 | 0.597 | 554 |
| Compara. Example 6 | 0.965 | 1369 |
| Compara. Example 7 | 1.074 | 1600 |
| Compara. Example 8 | 0.756 | 914 |
| Compara. Example 9 | 0.569 | 414 |

TABLE 5

|  | MnO Content (wt%) | Severance Index-Corrected Dissolution Rate Constant (ng/cm$^2$·hr) |
|---|---|---|
| Example 1 | 4.5 | 1374 |
| Example 2 | 1.7 | 1193 |
| Example 3 | 3.5 | 1228 |
| Example 4 | 4.0 | 1451 |
| Example 5 | 8.6 | 1182 |
| Example 6 | 7.7 | 1418 |
| Example 7 | 10.6 | 1342 |
| Example 8 | 14.3 | 1520 |
| Example 9 | 18.7 | 1569 |
| Example 10 | 0.5 | 1158 |
| Example 11 | 6.2 | 1310 |
| Compara. Example 5 | 0.1 | 1078 |
| Compara. Example 6 | 0.1 | 945 |
| Compara. Example 7 | 0.0 | 895 |
| Compara. Example 8 | 0.1 | 1027 |
| Compara. Example 9 | 0.0 | 1009 |

With respect to the heat resistance, the inorganic fibers of Comparative Examples 1 and 2 which had an SiO$_2$ content less than 60 wt% melted on heating at 1400°C. Those with an SiO$_2$ content of 60 wt% or more do not melt at 1400°C as in the Examples. It is seen that SiO$_2$ contents of 65 wt% or more secure sufficient heat resistance as in the Examples except Examples 9 and 11 and that SiO$_2$ contents of 70 wt% or more ensure further improved heat resistance as in Examples 1 to 4, 6, and 10. The compositions of Comparative Examples 1, 3, and 4 encounter a considerable difficulty in fiberising and are unfit for manufacture with existing apparatus.

The inorganic fibers according to the present invention exhibit equality or superiority in heat resistance and, owing to accelerated severance of the fiber network structure, superiority in biosolubility to conventional inorganic fibers and therefore minimize adverse influences on a living body.

## Claims

1. An inorganic fiber comprising, as essential components, $SiO_2$ in an amount of from 60 to 80% by weight, MgO in an amount of from 15 to 30% by weight, and a manganese oxide in an amount of from 0.5 to 20% by weight, said inorganic fiber having an amorphous portion comprising these essential components in its structure, said inorganic fiber further comprising $Al_2O_3$ in an amount of 2% by weight or less, CaO in an amount of 3% by weight or less, and each of $Na_2O$, $K_2O$ and BaO in an amount of 0.5% by weight or less, said fiber being free of titanium dioxide and zirconium oxide.

2. The inorganic fiber of claim 1 containing $SiO_2$ in an amount of from 65 to 80% by weight, MgO in an amount of from 15 to 28% by weight, and said manganese oxide in an amount of from 4 to 20% by weight.

3. A process of producing an inorganic fiber comprising:

   heating a raw material mixture at 1700 to 2000°C to obtain a melt, said raw material mixture comprising $SiO_2$ in an amount of from 60 to 80% by weight, MgO in an amount of from 15 to 30% by weight, a manganese oxide in an amount of from 0.5 to 20% by weight, $Al_2O_3$ in an amount of 2% by weight or less, CaO in an amount of 3% by weight or less, and each of $Na_2O$, $K_2O$ and BaO in an amount of 0.5% by weight or less, said raw material mixture being free of titanium dioxide and zirconium oxide, and
   fiberising the melt by quenching.

## Patentansprüche

1. Anorganische Faser, umfassend als wesentliche Komponenten $SiO_2$ in einer Menge von 60 bis 80 Gew.-%, MgO in einer Menge von 15 bis 30 Gew.-% und ein Manganoxid in einer Menge von 0,5 bis 20 Gew.-%, wobei die anorganische Faser einen amorphen Teil hat, der diese wesentlichen Komponenten in seiner Struktur umfasst, wobei die anorganische Faser weiter $Al_2O_3$ in einer Menge von 2 Gew.-% oder weniger, CaO in einer Menge von 3 Gew.-% oder weniger und jedes von $Na_2O$, $K_2O$ und BaO in einer Menge von 0,5 Gew.-% oder weniger umfasst, wobei die Faser frei ist von Titandioxid und Zirconiumoxid.

2. Anorganische Faser nach Anspruch 1, enthaltend $SiO_2$ in einer Menge von 65 bis 80 Gew.-%, MgO in einer Menge von 15 bis 28 Gew.-% und das Manganoxid in einer Menge von 4 bis 20 Gew.-%.

3. Verfahren zum Herstellen einer anorganischen Faser, umfassend:

   Erwärmen einer Rohmaterialmischung auf 1700 bis 2000°C zum Erhalt einer Schmelze, wobei das Rohmaterial $SiO_2$ in einer Menge von 60 bis 80 Gew.-%, MgO in einer Menge von 15 bis 30 Gew.-%, ein Manganoxid in einer Menge von 0,5 bis 20 Gew.-%, $Al_2O_3$ in einer Menge von 2 Gew.-% oder weniger, CaO in einer Menge von 3 Gew.-% oder weniger und jedes von $Na_2O$, $K_2O$ und BaO in einer Menge von 0,5 Gew.% oder weniger umfasst, wobei die Rohmaterialmischung frei ist von Titandioxid und Zirconiumoxid, und
   Bilden von Fasern aus der Schmelze durch Abschrecken.

## Revendications

1. Fibre inorganique comprenant, à titre de composants essentiels, $SiO_2$ en une quantité de 60 à 80 % en poids, MgO en une quantité de 15 à 30 % en poids, et un oxyde de manganèse en une quantité de 0,5 à 20 % en poids, ladite fibre inorganique ayant une fraction amorphe comprenant ces composants essentiels dans sa structure, ladite fibre inorganique comprenant en outre $Al_2O_3$ en une quantité de 2 % en poids ou moins, CaO en une quantité de 3 % en poids ou moins, et chacun parmi $Na_2O$, $K_2O$ et BaO en une quantité de 0,5 % en poids ou moins, ladite fibre étant dépourvue de dioxyde de titane et d'oxyde de zirconium.

2. Fibre inorganique selon la revendication 1, contenant $SiO_2$ en une quantité de 65 à 80 % en poids, MgO en une quantité de 15 à 28 % en poids, et ledit oxyde de manganèse en une quantité de 4 à 20 % en poids.

3. Procédé de production d'une fibre inorganique comprenant :

le chauffage d'un mélange de matières premières à 1700 à 2000°C pour obtenir une matière fondue, ledit mélange de matières premières comprenant $SiO_2$ en une quantité de 60 à 80 % en poids, MgO en une quantité de 15 à 30 % en poids, un oxyde de manganèse en une quantité de 0,5 à 20 % en poids, $Al_2O_3$ en une quantité de 2 % en poids ou moins, CaO en une quantité de 3 % en poids ou moins, et chacun parmi $Na_2O$, $K_2O$ et BaO en une quantité de 0,5 % en poids ou moins, ledit mélange de matières premières étant dépourvu de dioxyde de titane et d'oxyde de zirconium, et
le défibrage de la matière fondue par trempe.

## FIG. 1

## FIG. 2